# EUROPEAN PATENT APPLICATION

(11) **EP 3 312 413 A1**
(43) Date of publication of application: **25.04.2018**
(21) Application number: 15895578.1
(22) Date of filing: 17.06.2015
(51) Int. Cl.: F03D 1/00

(54) **WIND POWER GENERATION DEVICE**

(71) Applicant: Hitachi, Ltd., Tokyo 100-8280 (JP)
(72) Inventor: FUNABASHI Shigehisa, Tokyo 100-8280 (JP); SAWADA Takahiko, Tokyo 100-8280 (JP); WATANABE Masatoshi, Tokyo 100-8280 (JP); KAKUYA Hiromu, Tokyo 100-8280 (JP)
(74) Representative: Strehl Schübel-Hopf & Partner
(86) International application number: PCT/JP2015/067391
(87) International publication number: WO 2016/203557

(57) **Abstract**

The object of the present invention is to achieve a wind power generation device that reduces effects of a tower shadow.

In order to solve the problem, the wind power generation device related to the present invention includes a nacelle that includes a generator, blades that are connected to the generator of the nacelle through a shaft, receive wind, and rotate, and a tower that is disposed upstream of the wind with respect to the blades and supports the nacelle in a vertical direction, in which the tower includes a first portion having a tubular structure standing up in the vertical direction from an installation base section of the tower, and a second portion connecting the first portion and the nacelle to each other and having a ventilating structure that allows some of wind from the upstream side of the wind to go through at a position where the blade overlaps with the tower.

## Description

### Technical Field

The present invention relates to a wind power generation device.

### Background Art

A wind power generation device is configured that a nacelle supporting a rotor generally in the horizontal direction through a main shaft is provided at the upper part of a tower, the rotor rotating by blades. Inside this nacelle, it is common to provide a generator that is rotated by rotation of the main shaft of the blades. There is also a case of a configuration that a speed increasing gear is disposed between the rotor and the generator to increase the rotation speed of the generator in order to obtain a preferable rotation speed of the generator. Electric energy generated by the generator is converted to electric power that can be supplied to an electric power system through an electric power converter and a transformer. With respect to the tower, such configuration of generally circular tube shape whose diameter in the upper part reduces is commonly used which is obtained by welding of steel plates, and stacking parts made of concrete, and so on.

In recent years, the wind power generation device is getting bigger from the economical reason of increasing the electric power generation capacity. Correspondingly, the diameter of the rotor becomes large, and the height of the tower supporting the rotor has also been increasing.

In Patent Literature 1, it is described in the section of the background art that, with respect to the configuration of the tower used for a wind power generation device, there are examples of a pipe-shape tower, a lattice tower, and a configuration of combination of the lower tower of the lattice tower and the upper tower of the pipe-shape.

### Citation List

### Patent Literature

Patent Literature 1: Japanese Unexamined Patent Application Publication (translation of PCT Application) No. 2007-503539

### Summary of Invention

### Technical Problem

As the wind power generation device gets bigger, the load received by the rotor and tower from wind increases, and the own weight also increases. Therefore, the structure of the tower that is a support structure becomes thick and large in order to secure sufficient strength. In particular, the lower part of the tower becomes large compared to the upper part of the tower in order to avoid falling down of the tower, and the cross section also becomes large. Therefore, the parts themselves configuring the tower become large, and there comes up a problem in terms of manufacturing of the parts and transportation of the same to the installation site.

On the other hand, because the presence of the tower becomes a barrier for the flow of the wind, when the rotor rotates and comes below the blade, due to the turbulence of the wind by the effects of the tower, the flow of the air around the blade is changed. For example, in the case of a wind power generation device of the down-wind type in which the rotor having the blades rotates on the downstream side of the tower, the wind is blocked by the tower to reduce the speed, and comes to be disturbed and to flow in to the blade (so-called tower shadow). Further, also in the case of a wind power generation device of the up-wind type in which the rotor having the blades rotates on the upstream side of the tower, since the flow of the air is blocked in the vicinity of the upstream side of the tower where the blades rotate, the flowing-in state of the air with respect to the blade that goes through the position comes to change. Since such change of the flow of the air comes to apply a repeatedly fluctuating load to the blade, it possibly becomes a cause for occurrence of fatigue damage and noise of the blade in addition to the effects on the output of the wind power generation device. With respect to this point, in Patent Literature 1, there is no consideration on the relationship between the tower shadow and the tower structure.

The object of the present invention is to provide a wind power generation device that reduces the effects of the tower shadow. Solution to Problem

One of the representative ones of the present invention is a wind power generation device including a nacelle that includes a generator, blades that are connected to the generator through a main shaft, receive wind, and rotate, and a tower that is disposed upstream of the wind with respect to the blades and supports the nacelle in a vertical direction, in which the tower includes a first portion having a tubular structure standing up in the vertical direction from an installation base section of the tower, and a second portion connecting the first portion and the nacelle to each other and having a ventilating structure that allows some of wind from the upstream side of the wind to go through at a position where the blade overlaps with the tower. Advantageous Effect of Invention

According to the present invention, a wind power generation device capable of reducing the effects of the tower shadow can be achieved.

### Brief Description of Drawings

Fig. 1 is an overall schematic view of a wind power generation device of Example 1 related to an example of the present invention.
Fig. 2 is an overall schematic view of the wind power generation device of Example 1 related to an example of the present invention.
Figs. 3 are drawings showing each cross section of Fig. 1 in the wind power generation device of Example 1 related to an example of the present invention.
Fig. 4 is a drawing describing contribution to the bending moment applied to the root section of the blade in the wind power generation device of Example 1 related to an example of the present invention for each position in the radial direction of the blade.
Figs. 5 are overall schematic views of a wind power generation device of Example 2 related to an example of the present invention.
Fig. 6 is an overall schematic view of a wind power generation device of Example 3 related to an example of the present invention. Description of Embodiments

Although explanation is made in the present description with an example of a case a wind power generation related to an embodiment of the present invention is installed on land, the present invention is not limited to it, and a case of offshore installation and the like for example is also similar. Below, examples of the present invention will be explained using the drawings.

### [Example 1]

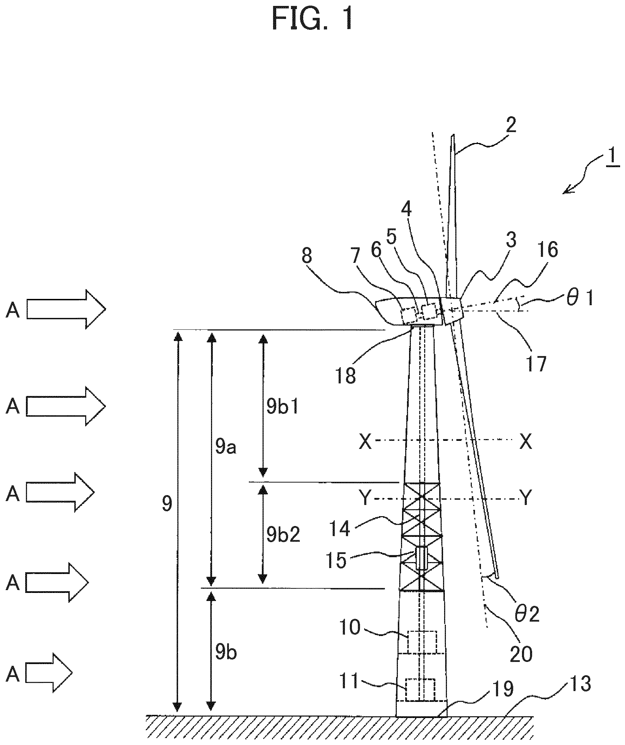

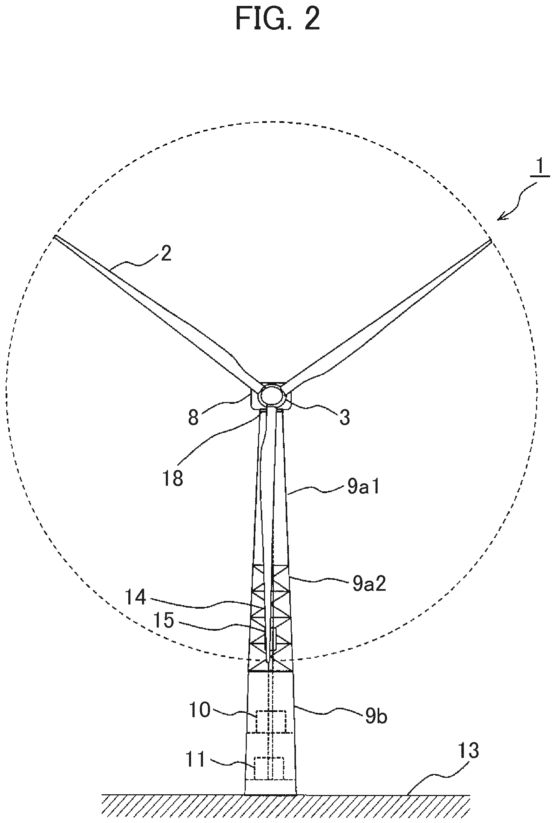

An overall schematic view of the wind power generation device of Example 1 is shown in Fig. 1 and Fig. 2. As shown in Fig. 1, the wind power generation device 1 disposes a nacelle 8 at the top of a tower 9, and the nacelle 8 pivotally supports a rotor that includes three blades 2 and a hub 3. The rotor is connected to a generator 7 through a main shaft 4, a speed increasing gear 5, and a high speed shaft 6 (an output shaft of the speed increasing gear 5). In other words, the rotor that receives wind and rotates is connected to the generator through the main shaft. The generator 7 is electrically connected to electric components such as an electric power converter 10 and a transformer 11 by a power cable (not illustrated), the electric power converter 10 and the transformer 11 being incorporated in a lower tower 9b of the tower 9. The speed increasing gear 5 includes plural gears for example, increases the rotational angular velocity of the main shaft 4 by a gear ratio, and transmits the rotational angular velocity after speed increase to the generator 7. In this drawing, the main shaft 4 to the generator 7 are accommodated within the nacelle, and are therefore shown by a dotted line as the internal structures.

Between the nacelle 8 and the tower 9, a yaw control mechanism (yaw bearing) 18 is arranged, and the nacelle 8 is controlled so as to turn with respect to the tower 9 according to the wind direction. Since the wind power generation device 1 is a wind power generation device of the down-wind type, the nacelle 8 turns so as to direct the rotation surface of the rotor to the downstream side of the wind (yaw control), the blades 2 receive a force by energy of the wind, and the rotor rotates. The yaw control is executed by a yaw bearing 18. Rotation of the rotor is increased to a rotation speed suitable to the generator 7 through the speed increasing gear 5 and the high speed shaft 6, and is transmitted to the generator 7. Electric energy generated by rotation of the generator 7 is rectified by the electric power converter 10, is adjusted with respect to the voltage by the transformer 11, and is supplied to an electric power system (not illustrated) . Also, inside the tower 9, an elevator 15 for maintenance is arranged which can move vertically along a guide rail 14 and is for allowing a worker to have access to the nacelle and the like. In this drawing, because the electric power converter 10, the transformer 11, and a guide rail 14 are accommodated inside the tower 9, portions becoming the internal structure are shown by the dotted line.

### <Explanation of ventilation structure arranged in tower>

In Fig. 1 and Fig. 2, a state is shown that one of three blades comes to the lowermost point and overlaps with the tower. The tower 9 is configured of an upper tower 9a that overlaps with the blade when the blade comes to the lowermost point and a lower tower 9b that does not overlap with the blade. The upper tower 9a and the lower tower 9b also can be called the first portion and the second portion of the tower more commonly. The lower tower 9b has a tubular structure (can be also referred to as a shell structure, pipe-like structure, circular tube-like structure) having the diameter reducing from the bottom to the top and not allowing the wind to go through, includes a tower installation base section 19, and is installed on and fixed to the ground 13. The upper tower 9a has a ventilation structure at a part thereof, the ventilation structure being for allowing some of the wind from the upstream side of the wind to go through. In the present example, the upper tower 9a is divided into a first section 9a1 and a second section 9a2, the first section 9a1 is made a tubular structure not allowing the wind to go through, and the second section 9a2 is made a ventilation structure achieved by a truss structure (also can be called a lattice-like structure). Although it is not limited particularly, the second section 9a2 may be formed as a tower assembly that has circular flanges at the top and bottom which are connected to each other by a truss structure. Further, it is also possible that the first section 9a1 and the lower tower 9b are formed as tower assemblies of a tubular structure, and are connected to and assembled with the second section 9a2 using flanges by bolts, welding, and the like. The manner of dividing into tower assemblies may be into three sections such as 9a1, 9a2 and 9b, or it is also possible to employ another manner of division considering transportation, strength, cost and the like and to achieve the tower 9 as a result.

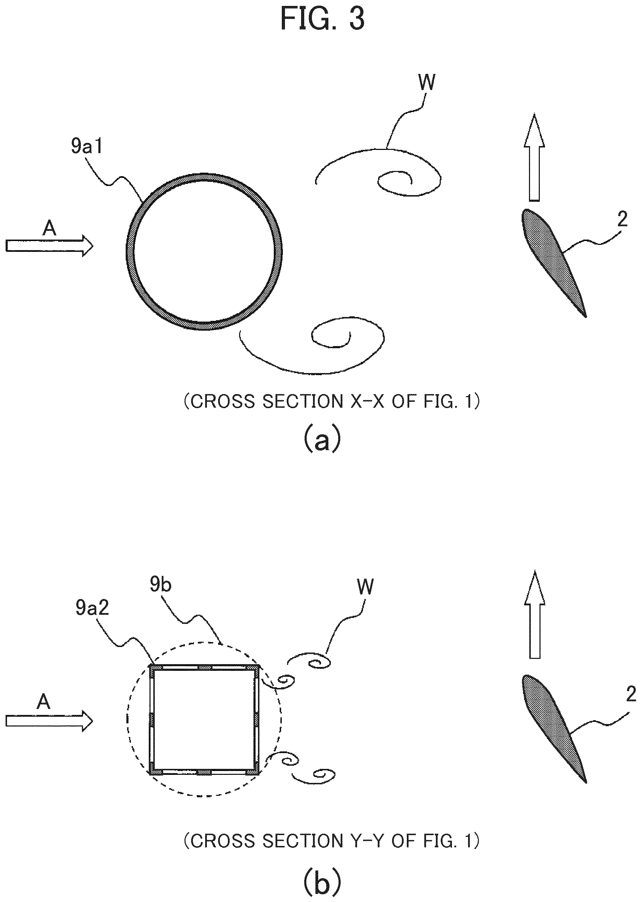

Figs. 3 show each cross section of the upper tower 9a. Fig. 3(a) is a cross section X-X (refer to Fig. 1) of the first section 9a1, and is a tower with only a tubular structure used in a common tower. Therefore, the wind A comes to collide on the first section 9a1, and there is no event of going through the first section 9a1. At the portion of Fig. 3(a), between before and after the wind A goes through the tower shadow, a difference occurs in the load received by the blade 2 from the wind A, and fluctuation in the load to the blade 2 occurs.

On the other hand, Fig. 3(b) is a cross section Y-Y (refer to Fig. 1) of the second section 9a2 and has a truss structure, a space allowing the wind to go through is arranged, and the wind A having collided on the tower 9 can go through gaps of 9a2. Therefore, between before and after going through the tower shadow, the difference in a load received by the blade 2 from the wind A becomes small, and fluctuation in the load to the blade 2 becomes small. With this structure, in the range of the tower shadow of the tower 9, the wind can go through.

### <Detail of more preferable ventilation structure>

In Fig. 1, the length of the upper tower 9a is made generally equal or slightly longer than to the length of the blade (approximately 105% to 110% of the length of the blade). The reason is that the effects of the wind received by the wind end section of the blade are noticeable as described below. Also, in the upper tower 9a, it is preferable that the rate of the second section that has the ventilation structure is made 30% to 100% of the upper tower 9a.

The peripheral speed of the blade is proportional to the radial position and is higher in the outer side. The relative speed of the air with respect to the blade which is obtained by synthesizing the peripheral speed of the air and the natural wind is also higher in the outer side. When it is considered to be simplified so that the wing arc length and the wing type of the blade are same regardless of the position in the radial direction, since an aerodynamic load applied to the blade is proportional to the square of the relative speed, a large load comes to be applied to the blade portion positioned on the outer side where the radial position is large. Since it is a matter of course that this load also becomes torque that rotates the rotor, the blade of the outer side where the radial position is large comes to contribute also to the electric power generation quantity. Further, since the distance between the outer side and the root part of the blade is large, the root part of the blade being most severe in terms of the strength, the effects on the bending moment applied to the root part becomes further larger.

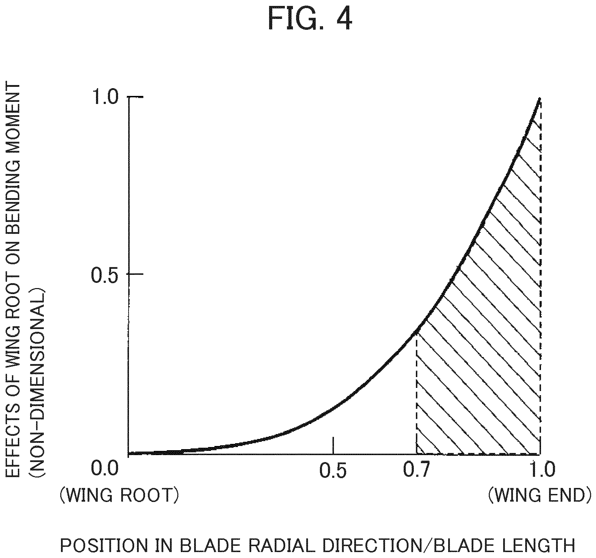

The graph of Fig. 4 shows calculation of the contribution to the bending moment applied to the root part of the blade at each position from the blade root (0) to the wing end (1) of the blade. As a rough calculation of a case the effects of the wing end is also neglected in addition to such simplification as described above, approximately 75% (3/4 of the total) of the bending moment comes to be determined by the portion of 70% or more in the radial direction (the portion of 30% as seen from the wing end toward the root direction) for example (integral of the oblique line portion of Fig. 4). Therefore, by arranging the ventilation structure that is achieved by the second section 9a2 of the upper tower in a portion of approximately 30% upward from the wing end for example instead of arranging in the entire upper tower, the effects of the bending moment applied to the blade can be reduced by as much as 75% compared to a case the ventilation structure is not arranged. Also, when the ventilation structure is arranged in the portion of approximately 50% as seen in the direction from the wing end of the second section, the effects of the bending moment applied to the blade can be reduced by 93% compared to a case the ventilation structure is not arranged.

Thus, in the blade, the effects with respect to both of the electric generation quantity and the load of the position whose radial position is large are overwhelmingly large. Suppression of the turbulence of the wind by the tower shadow and the fluctuation load by the turbulence in the position described above exerts a significant effect on the performance and the reliability of the entire wind power generation device.

### <Tilt angle and coning angle>

In the wind power generation device, there is an example of arranging a tilt angle θ1 of 8 degrees in the rotation axis in order to reduce the risk that the blade collides on the tower when the blade warps. The tilt angle is the angle θ1 between a horizontal reference axis 17 and a reference line 16 of the rotation axis of the rotor in Fig. 1, the upward direction from the horizontal reference axis 17 is defined to be the plus side, and the tilt angle does not take a negative value because the reference line 16 of the rotation axis of the rotor agrees with the horizontal reference axis when θ1=0 degree. When the tilt angle is increased upward from the horizontal reference axis, a possibility of collision of the blade and the tower is reduced and the effects of the tower shadow can be reduced. However, there is such a trade-off that, as the tilt angle is increased, blades come not to oppose the wind coming from the horizontal direction and the efficiency in rotating the rotor drops.

As described above, when the ventilation structure of the present example is employed, the effects of the power shadow can be reduced, therefore the tilt angle can be reduced compared to a case of using a tower having a tubular structure in its entirety, the efficiency of hitting the blade by the wind improves further as a result, and the electric power generation efficiency improves. As described above, when the ventilation structure is arranged in the portion of 30 to 100% from the direction of the distal end side of the blade in the upper tower 9a, the tilt angle can be set to 0 degree or more and less than 6 degrees. It is more preferable to set the tilt angle to 0 degree or more and less than 5 degrees.

Further, in the rotor of the wind power generation device, a coning angle (or cone angle) θ2 also is usually arranged. The coning angle is an attaching angle θ2 of the blade with respect to a reference line 20 of the orthogonal plane that is perpendicular (90 degrees) to the reference line 16 of the rotation axis of the rotor in Fig. 1, and does not take a negative value because the blade agrees with the reference line of the orthogonal plane when θ2=0 degree. In the down-wind type, the coning angle is arranged toward the downstream direction of the wind (the direction the distal end of the blade departs from the tower). There is an example of employing a value of 5 degrees of a down-wind type wind power generation device coning angle having a tower that has a tubular structure in its entirety. The coning angle is also arranged for a reason similar to that for the tilt angle described above, and is a parameter having a trade-off between reduction of the tower shadow and the efficiency of hitting the blade by the wind.

When the ventilation structure of the present example is employed, the effects of the power shadow can be reduced, therefore the coning angle can be reduced compared to a case of using a tower having a tubular structure in its entirety, and the coning angle can be set to 0 degree or more and less than 4 degrees when a ventilation structure is arranged in a portion of 30 to 100% from the direction of the distal end side of the blade in the upper tower 9a. It is more preferable to set the coning angle to 0 degree or more and less than 3 degrees.

### <Lower tower>

Below, the structure of the lower tower 9b will be explained which is another feature of the tower 9 of the wind power generation device 1 of the present example.

As described above, moment is applied to the lower tower 9b so as to make the tower 9 fall down by a wind load received by the wind power generation device 1. In the wind power generation device 1 of a large size, since this moment applied to the base section 17 becomes large, the diameter of the lower tower 9b is increased, or the cross section is enlarged despite the lattice-like structure as described in Patent Literature 1, and thereby falling down and breakage of the tower are prevented. However, the size increase of the lower tower increases the area occupied by the wind power generation device and has problems in terms of manufacturing of the tower and transportation of the parts to the installation site.

As described above, since the wind power generation device of the present example employs a lattice-like configuration partly in the upper tower 9a, the moment applied to the tower base section 17 can be relatively reduced. Therefore, compared to an ordinary wind power generation device having a similar size, a configuration of the tower base section 17 can be made compact, and members can be made thin. However, since it is still the same that the tower base section 17 is a portion where the moment of falling down the tower 9 is severest, when it is intended to stand this falling down moment while the entirety remains to be of the lattice structure, the cross section of the lower part of the tower is liable to become large, and a configuration sufficient to the problems described above cannot be secured.

On the other hand, the lower tower 9b of the wind power generation device of the present example has a tubular side configuration made of steel plates, and is configured to include the electric power converter 10 and the transformer 11 in the inside. Since the tubular structure more easily secures geometrical moment of inertial compared to the lattice-like structure, the strength of it is easily maintained, resistance to the falling down moment can be improved, and therefore the cross section of the tower base section 17 can be made small. Correspondingly, the wind power generation device of the present example can have the electric power generation capacity of 2 MW or more.

In other words, firstly, by making at least a part of the upper part 9a of the tower a lattice-shape, a wind load and a tower falling down moment are reduced. Next, by a synergetic effect of the moment reduction effect and the tubular structure the tower 9b of the lower part, the size of the tower base section 17 is suppressed. As a result, the transportation performance is improved with miniaturization and weight reduction of the tower members, and the area occupied by the tower is reduced.

Furthermore, since the facilities such as the electric power converter 10 and the transformer 11 can be installed inside the tubular structure of the lower tower 9b, it is not required to arrange a facility (a container for example) for isolating these devices from the external environment and accommodating them inside separately from the wind power generation device 1, and the effects of suppressing the occupied area and suppressing the cost are secured. In this case, although an openable doorway such as a door comes to be required for carrying in/out and maintenance of the electric power converter 10 and the transformer 11, the strength at the tower base section 17 is more easily secured compared to a configuration of having a truss structure all through to the ground.

Also, in the wind power generation device 1, it is necessary that a worker enters the nacelle 8 at the upper section of the tower 9 for its maintenance, and an elevator is usually installed inside the tower 9 for the purpose. However, in the portion of the ventilation structure of the upper tower 9a, since the worker having got on is in a state of being exposed to the outside in an ordinary elevator, there is a problem in safety. In the wind power generation device of the present example, by separating the boarding section 15 where a worker gets on from the outside by employing a gondola shape, the risk of just in case of falling and the like is reduced. Also, since the boarding section 15 having a gondola shape is at a position of the portion of the ventilation structure only when the worker moves for maintenance work and the like and is accommodated in the lower tower 9b when the wind power generation device is in ordinary operation, the effect described above of relaxing the effects of the tower shadow is maintained.

In addition, the tower structure described above has an effect suitable also to the time of a storm. The wind quantity generation device 1 is configured to prevent the damage of the wind power generation device 1 itself by adjusting the pitch angle of the blades 2 to fend off the wind (feather) at the time of a storm and suppressing rotation of the rotor. In this standby state against a storm, in order that the blades 2 do not receive a wind load to a maximum content, a wind load received by the tower 9 becomes relatively large. On the other hand, since the wind power generation device 1 of the present example has a lattice-like structure in which the wind can flow through the tower upper section 9a, a wind load received by the tower 9 can be suppressed. Because the wind speed is high in an upper level region in general, arrangement of a lattice-like structure in the tower upper section 9a positioned in the upper level region is effective in reducing the wind load applied to the wind power generation device. In addition, since a position where the wind load is applied to the tower 9 can be thereby made a low position, an effect of reducing a moment applied to the tower base section 17 is also large.

The above can be summarized as follows.
(1) By configuring a tower of a wind power generation device to include a first portion having a tubular structure standing up in the vertical direction from an installation base section of the tower, and a second portion connecting the first portion and the nacelle to each other and having a ventilating structure that allows some of wind from the upstream side of the wind to go through at a position where the blade and the tower overlap, the effects of the tower shadow are reduced, the wind can be supplied to the blades, therefore the electric power generation efficiency improves, and fluctuation in a load to the blades can be reduced.
(2) By arranging the ventilation structure in a portion where the blade overlaps with the tower upward from a wind end position of the blade when the blade is at the lowermost point in (1), the electric power generation efficiency and reduction of the fluctuation in a load to the blades can be further improved.

### [Example 2]

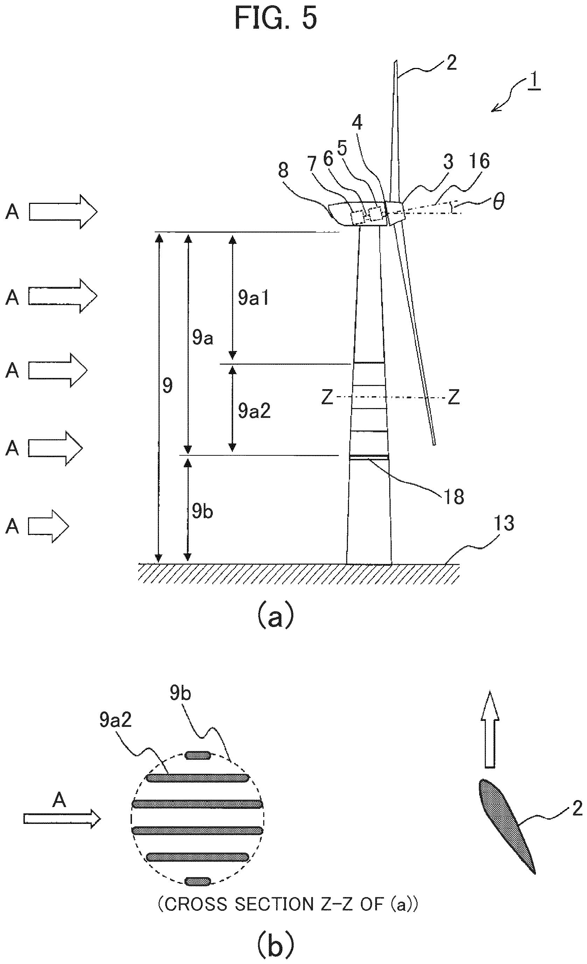

An overall schematic view of the wind power generation device 1 of Example 2 is shown in Fig. 5(a). Explanation on positions similar to those of the example described above will be omitted. In the wind power generation device 1 of Example 2, the concrete shape of the ventilation structure of the second section of the upper tower 9a employs an aerodynamic shape, and the position of the yaw control mechanism 18 is moved from beneath the nacelle to a location between the upper tower 9a and the lower tower 9b.

A cross section Z-Z of the second section 9a2 of Example 2 is shown in Fig. 5(b). The second section of Example 2 has a structure in which plural plate-shape columns having an aerodynamics shape that allows wind to easily go through are arrayed in parallel, support a load as a part of the tower, and can let the wind A go through. Seen from another viewpoint, it can also be understood that vertically long slits subjected to aerodynamic processing allowing the wind to go through are arranged by a plurality in parallel in the tubular tower. Although the second section 9a2 is divided into four portions in Fig. 5 (a), those obtained by forming the plural plate-shape columns of Fig. 5 (b) in each portion are stacked by four stages and are connected by flanges and the like. This number of stacking stage and the like are designed considering the load and required strength.

The ventilation structure of a truss structure exemplified in Example 1 has no anisotropy in ventilation of wind and therefore is not affected noticeably even when the wind direction changes. However, in such plural ventilation slits as described in Example 2, ventilation becomes anisotropic, and therefore easiness of the wind to go through comes to largely depend on the wind direction. Therefore, in the present example, the yaw control mechanism 18 is arranged beneath the second section, and turning of the rotor, the nacelle, and the upper tower 9a is controlled with respect to the wind direction.

In Example 2 also, the effects of the tower shadow can be reduced similarly to Example 1.

Further, although the ventilation structure is achieved by the plural plate-shape columns in Example 2, as a similar structure, a structure is possible in which plural holes of an ellipse or a circle are bored in a direction orthogonal to a circular column axis in a case where a tube is made generally a circular column in a tower assembly of the tubular structure and the wind is made go through which contributes to reduction of the tower shadow in a similar manner. In other words, various shapes are possible with respect to the holes arranged for ventilation.

### [Example 3]

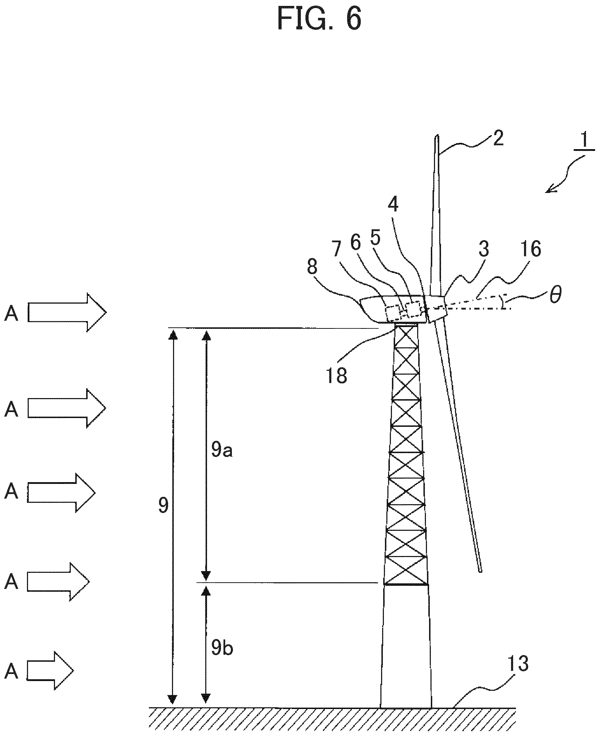

An overall schematic view of the wind power generation device 1 of Example 3 is shown in Fig. 6. Explanation on positions similar to those of the examples described above will be omitted. Example 3 is obtained by making the entirety of the upper tower 9a have a ventilation structure in Example 1.

From the above, the entirety of the positions where the load fluctuation of the wind A to the blades 2 because of the tower shadow is large becomes a lattice-like tower, and therefore the load fluctuation by a wind 2 to the blade 2 before and after the blade 2 goes through the tower shadow can be made smaller than that of Examples 1, 2. In concrete terms, down to a portion located slightly lower than the distal end of the blade 2 when the rotating blade 2 is positioned at the lowermost end has a truss (lattice) structure. In other words, the second portion is longer than the blade 2, and the ventilation structure is arranged in the entire second portion. In the portion, the effects on the wind by the tower 9 are reduced, and the wind with less turbulence and less speed reduction comes to flow in to the blade 2 that is positioned downstream of the tower 9. Thus, the effects of the tower shadow such as the fluctuation in the load to the blade 2 and the torque pulsation as described above can be suppressed.

Although the examples of the present invention have been explained above, the examples shown above are only examples, and do not limit the present invention.

For example, also in a wind power generation device of an up-wind type in which a rotor is positioned on the upstream side of a tower, a similar phenomenon possibly occurs although it is not relatively to an extent of a wind power generation device of a down-wind type. In other words, since a tower having a constant projection area with respect to the wind is located on immediately downstream side of the rotating blades, the wind flow of the portion is blocked which possibly becomes causes of the fluctuating load to the blade and torque pulsation of the rotor. Therefore, it can be expected that such effects of the present invention as described above are secured for a wind power generation device of an up-wind type, which is within a range intended by the present invention.

Further, although explanation has been made with an example of a tubular tower as the lower tower, the shape is not necessarily limited to a tube having a circular tube shape, and with respect to those having a cross section of a closed shape (a square and a hexagon for example) except for a portion such as a door, the strength stronger than that of the lattice-like tower positioned above the lower tower can be expected which is within a range intended by the present invention.

As a ventilation structure of the upper tower, although a truss structure having a quadrangular cross section is exemplified in Fig. 3(b), it is also possible to employ a truss structure having a polygonal cross section that is nearer to a circle such as a hexagonal or octagonal cross section, and the like. Further, it is also an option to change the truss structure to a rigid-frame structure. The truss structure and the rigid-frame structure can be collectively called a lattice-like structure.

Further, in wind power generation installed on the ocean, there is a case a mono-pile type foundation is used in order to suppress the cost of its foundation. When the diameter of the foundation is large, a pile driver for installing a mono-pile type foundation on the sea bed also requires a large one, and therefore it is also important to keep the tower diameter in the tower base section to a constant dimension or less in terms of suppressing the cost of the marine construction. The wind power generation device of the present invention has an effect of suppressing the tower base section from becoming large and is therefore useful in such offshore wind power generation also, which is within a range intended by the present invention.

### List of Reference Signs

- 1: Wind power generation device
- 2: Blade
- 3: Hub
- 4: Main shaft
- 5: Speed increasing gear
- 6: High speed shaft
- 7: Generator
- 8: Nacelle
- 9: Tower
- 9a: Upper tower
- 9a1: First section of upper tower
- 9a2: Second section of upper tower
- 9b: Lower tower
- 10: Electric power converter
- 11: Transformer
- 13: Ground
- 14: Guide rail of elevator
- 15: Elevator for working
- 16: Reference line of rotation axis of rotor
- 17: Horizontal reference line
- 18: Yaw bearing
- 19: Tower base section
- 20: Reference line of orthogonal plane orthogonal (90 degrees)
- to: reference line of rotation axis of rotor
- A: Wind
- W: Turbulent flow downstream of tower
- θ1: Tilt angle
- θ2: Coning angle (cone angle)

## Claims

1. A wind power generation device, comprising:
a nacelle that includes a generator;
a rotor that includes blades that are connected to the generator through a main shaft, receive wind, and rotate; and
a tower that is disposed upstream of the wind with respect to the rotor and supports the nacelle in the vertical direction,
wherein the tower includes:
a first portion having a tubular structure standing up in the vertical direction from an installation base section of the tower; and
a second portion connecting the first portion and the nacelle to each other and having a ventilating structure that allows some of the wind from the upstream side of the wind to go through at a position where the blade overlaps with the tower.

2. The wind power generation device according to claim 1, wherein the ventilation structure is arranged in a portion where the blade overlaps with the tower upward from a wing end position of the blade of the time when the blade is positioned at a lowermost point.

3. The wind power generation device according to claim 1 or 2, wherein the length of the second portion is longer than that of the blade, and the ventilation structure is arranged in the entire second portion.

4. The wind power generation device according to any one of claims 1 to 3, wherein the nacelle turns with respect to the tower according to the wind direction.

5. The wind power generation device according to any one of claims 1 to 4, further comprising a yaw control mechanism that is arranged between the nacelle and the tower.

6. The wind power generation device according to claim 1 or 2,
wherein the second portion is divided into a first section and a second section between the nacelle and the first portion,
the first section is connected to the nacelle and has a tubular structure that does not include the ventilation structure, and
the second section connects the first section and the second portion to each other, and includes the ventilation structure that is arranged at a position of overlapping with the blade in the root direction from a wing end of the blade at a position where the blade overlaps with the tower.

7. The wind power generation device according to claim 6,
wherein the second section has a tubular structure including slits that are arranged at a position overlapping with the blade in the direction of a rotation axis side from the distal end of the blade in a position where the blade overlaps with the tower and allow the wind to go through, and
a yaw control mechanism is further provided which is arranged between the first portion and the second portion and makes the rotor and the first portion turn to the wind direction.

8. The wind power generation device according to claim 6 or 7, wherein the second section has a length of 30% to 100% of the blade length.

9. The wind power generation device according to any one of claims 1 to 6, wherein the ventilation structure is a tower assembly having a truss structure or a rigid-frame structure through which the wind blows.

10. The wind power generation device according to any one of claims 1 to 9, wherein the blade has a coning angle that is set to 0 degree or more and less than 4 degrees.

11. The wind power generation device according to any one of claims 1 to 10, wherein a main shaft that rotates the rotor has a tilt angle that is set to 0 degree or more and less than 6 degrees.
